# EUROPÄISCHE PATENTSCHRIFT

(11) **EP 0 499 066 B1**
(45) Veröffentlichungstag und Bekanntmachung des Hinweises auf die Patenterteilung: **01.09.1993**
(21) Anmeldenummer: 92101058.3
(22) Anmeldetag: 23.01.1992
(51) Int. Cl.: H01S 3/06, G02B 6/24, H04B 10/16

(54) **Faseroptischer Verstärker**
Optical fiber amplifier
Amplificateur à fibre optique

(30) Priorität: 13.02.1991 DE 4104268
(43) Veröffentlichungstag der Anmeldung: 19.08.1992
(73) Patentinhaber: Alcatel SEL Aktiengesellschaft, D-70435 Stuttgart (DE)
(72) Erfinder: Pfeiffer, Thomas, W-7000 Stuttgart 80 (DE); Rossberg, Rolf, W-7141 Schwieberdingen (DE); Bülow, Henning, W-7250 Leonberg (DE)
(74) Vertreter: Pohl, Herbert, Dipl.-Ing.

(56) Entgegenhaltungen:
- EP-A- 0 425 014
- US-A- 4 963 832
- ELECTRONICS LETTERS. Bd. 22, Nr. 6, 13. März 1986, STEVENAGE GB Seiten 318 - 319; D.B. MORTIMORE ET AL.: 'Low-loss joints between dissimilar fibres by tapering fusion splices'

## Beschreibung

Die Erfindung betrifft einen faseroptischen Verstärker, wie er aus der druckschriftlichen Veröffentlichung "ECOC '89", Fifteenth European Conference on Optical Communication, September 10-14, 1989, Gothenburg, Sweden, Proceedings, Vol. 1, Regular Papers TuA 5-7, Seiten 86 bis 89, bekannt ist. Bei diesem Verstärker wird das von einer Pumplichtquelle abgestrahlte Licht und das vom Signallicht der Übertragungsleitung ankommende Licht in einem Pumpkoppler zusammengeführt und gemeinsam auf ein aktives Faserstück gegeben. Das aktive Faserstück weist jedoch üblicherweise andere Modenfelddurchmesser auf als der Pumpkoppler und die standardisierten Lichtwellenleiter der ankommenden und abgehenden Übertragungsleitungen. Aus diesem Grund entstehen an den Spleißstellen zwischen den verschiedenen Lichtwellenleitern Dämpfungsverluste, sowohl beim Pumplicht als auch bei dem Signallicht.

Mit standardisierten Lichtwellenleitern werden hier Einmodenfasern bezeichnet, wie sie üblicherweise in optischen Systemen der öffentlichen Nachrichtentechnik verwendet werden.

In EP 0 425 014 A1, Stand der Technick nach Artikel 54(3) EPÜ, ist ein aus Pumplichtquelle, Pumpkoppler und aus einem der Verstärkung dienenden Faserstück bestehender faseroptischer Verstärker beschrieben. Der verwendete Pumpkoppler ist ein optischer Verschmelzkoppler, der aus zwei gleichen Einmodenfasern hergestellt ist. Damit die Spleißstelle zwischen dem Pumpkoppler und dem der Verstärkung dienenden Faserstück nur geringe Dämpfungsverluste verursacht, haben die Einmodenfasern einen dem Faserstück entsprechend angepaßten Modenfelddurchmesser.

Ein weiterer faseroptischer Verstärker ist in US-A-4 963 832 beschrieben. Der hier zum Einsatz kommende Koppler ist ein optischer Anschliffkoppler. Dieser besteht aus zwei verschiedenen, in einem Substratblock befestigten Lichtwellenleitern. Es sind dies eine Einmodenfaser, wie sie zur Übertragung von Signallicht üblicherweise verwendet wird und eine mit Erbium dotierte Faser, die zur Verstärkung des Signallichtes dient. Weil die zur Signallichtübertragung vorgesehene Einmodenfaser normalerweise einen von dem der Verstärkung dienenden Faserstück abweichenden Modenfelddurchmesser hat, ist zwischen die Schliffflächen des Kopplers eine Flüssigkeit eingebracht, die einen dem Fasermantel nahekommenden Brechungsindex hat und welche die Dämpfungsverluste in Grenzen hält.

Der Erfindung liegt die Aufgabe zugrunde, einen faseroptischen Verstärker mit verbessertem Wirkungsgrad zu schaffen. Diese Aufgabe wird erfindungsgemäß durch die im Anspruch 1 angegebenen Merkmale gelöst. Vorteilhafte Ausgestaltungen des faseroptischen Verstärkers sowie entsprechende Herstellungsverfahren sind den Unteransprüchen zu entnehmen.

Die Erfindung wird anhand eines in einer Zeichnung schematisch dargestellten Ausführungsbeispiels des faseroptischen Verstärkers wie folgt näher erläutert.

Der faseroptische Verstärker besteht aus einer Pumplichtquelle 1, einem Pumpkoppler 2 mit vier Anschlüssen 3 bis 6 und einem aktiven Faserstück 7. Der erste Anschluß 3 des Pumpkopplers 2 ist mit der Pumplichtquelle 1, der zweite Anschluß 4 mit dem Lichtwellenleiter einer ankommenden Übertragungsleitung 8 und der dritte Anschluß 5 mit einem Ende des aktiven Faserstücks 7 verbunden, dessen weiterführendes anderes Anschlußende mit dem Lichtwellenleiter einer abgehenden Übertragungsleitung 9 verbunden ist. Der vierte Anschluß 6 des Pumpkopplers 2 bleibt in diesem Fall frei.

In dem faseroptischen Verstärker, dessen Faserstück 7 beispielsweise mit Erbium oder Neodym dotiert ist, werden die aktiven Ionen mit Hilfe der Pumplichtquelle 1 angeregt, um anschließend die Lichtwellen des von der ankommenden Übertragungsleitung 8 geführten Signallichts zu verstärken. Um nun die Verluste des Verstärkers zu verringern, die hauptsächlich wegen der unterschiedlichen Modenfelddurchmesser zwischen dem aktiven Faserstück 7 und dem Pumpkoppler 2 sowie den standardisierten Lichtwellenleitern der ankommenden und abgehenden Übertragungsleitungen 8, 9 an den entsprechenden Spleißstellen 10 entstehen, wird der Pumpkoppler 2 aus einer Faser hergestellt, deren Modenfelddurchmesser für das Pumplicht an den Modenfelddurchmesser des dotierten, aktiven Faserstücks 7 angepaßt ist. Die kleinsten Spleißverluste werden hierbei dadurch erzielt, daß eine nicht dotierte Faser oder eine dem dotierten Faserstück 7 entsprechende Faser ohne Dotierung verwendet wird. In diesem Fall reduzieren sich die durch eine Fehlanpassung der Modenfelddurchmesser entstehenden Verluste auf die Spleißstellen 10 zwischen der ankommenden Übertragungsleitung 8 und der Anschlußfaser 4 des Pumpkopplers 2 einerseits sowie auf die Spleißstelle 10 zwischen dem dotierten, aktiven Faserstück 7 und der abgehenden Übertragungsleitung 9. Vorausgesetzt, daß das Kopplerende des ersten Anschlusses 3 direkt an die Pumplichtquelle 1 gekoppelt ist, ist bei dieser Lösung nur das Signallicht von der Fehlanpassung der Modenfelddurchmesser betroffen. Diese kann jedoch durch einen Taper-Spleiß verringert werden.

Bei der erfindungsgemäßen Lösung wird der Verlust des Signallichts an den Spleißstellen 10 zwischen der ankommenden Übertragungsleitung 8 und dem Pumpkoppler 2 dadurch verringert, daß der Pumpkoppler 2 aus zwei verschiedenen Fasern hergestellt wird. Hier besteht der sich zwischen dem ersten und dritten Anschluß 3, 5 erstreckende Pumpzweig aus einer Faser, deren Modenfelddurchmesser für das Pumplicht an den Modenfelddurchmesser des dotierten Faserstücks 7 angepaßt ist. Der sich zwischen dem zweiten und vierten Anschluß 4, 6 erstreckende Signalzweig des Pumpkopplers besteht dagegen aus einer Faser mit einem inneren Mantelbereich, dessen Brechungsindex an den Brechungsindex des äußeren Mantelbereichs angepaßt ist (matched cladding) und die im übrigen die gleichen optischen Eigenschaften aufweist wie der Lichtwellenleiter der Übertragungsleitung 8. Deren Faser kann aber z.B. auch einen inneren optischen Mantel mit einem Brechungsindex haben, der kleiner ist als der Brechungsindex des äußeren Fasermantels (depressed cladding). Die Spleißdämpfung zwischen der aus einer solchen Faser bestehenden Übertragungsleitung 8 und der für den entsprechenden Signalzweig des Pumpkopplers 2 verwendeten Faser ist jedoch vernachlässigbar gering.

Wird ein Koppler aus ungleichen Fasern hergestellt, dann koppelt das Licht nicht vollständig aus der einen zur anderen Faser über. Damit geht ein Teil des Signal- oder des Pumplichtes für die Verstärkung verloren. Ein vollständiges Überkoppeln des Lichtes ist nur dann möglich, wenn die Ausbreitungskonstanten ß in jeder Faser im Bereich der Koppelzone gleich groß sind. Die Ausbreitungskonstanten lassen sich z.B. dadurch aneinander anpassen, indem eine der Fasern vor dem Verschmelzen und Ausziehen zum Koppler getapert wird. Eine andere Möglichkeit besteht darin, daß bei einer der Fasern der Mantel vor dem Ziehen des Kopplers teilweise oder ganz durch Abätzen entfernt wird. Um die aus der noch weiterhin vorhandenen Fehlanpassung der Modenfelddurchmesser resultierenden Verluste zu verringern, ist die Spleißstelle 10 zwischen dem dotierten Faserstück 7 und dem Lichtwellenleiter der abgehenden Übertragungsleitung 9 getapert. Taperspleiße können sowohl durch Ziehen und Verjüngen des Außendurchmessers der Fasern als auch durch Kerntaper hergestellt werden, bei denen die Anpassung der Modenfelddurchmesser mittels einer im wesentlichen nur die Faserkerne beeinflussenden Wärmequelle vorgenommen wird.

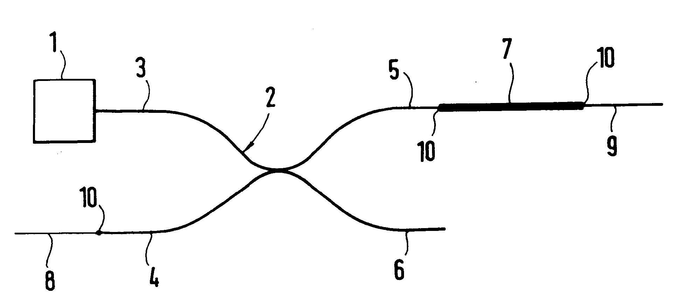

## Patentansprüche

1. Faseroptischer Verstärker, bestehend aus einem mehrere Anschlüsse (3 - 6) aufweisenden Pumpkoppler vom Typ optischer Verschmelzkoppler, einer mit einem ersten Anschluß (3) des Pumpkopplers (2) verbundenen Pumplichtquelle (1) und einem mit einem weiteren Anschluß (5) des Pumpkopplers (2)verbundenen, dotierten Faserstück (7), dessen freies Ende und ein weiterer Anschluß (4) des Pumpkopplers (2) zur Verbindung mit aus standardisierten Lichtwellenleitern bestehenden optischen Übertragungsleitungen (8, 9) dienen, wobei der einerseits für die Ankopplung an die Pumplichtquelle (1) vorgesehene und andererseits mit dem dotierten Faserstück (7) verbundene Zweig des Pumpkopplers (2) aus einer an den Modenfelddurchmesser des dotierten Faserstücks (7) angepaßten Faser besteht und wobei der dem Anschluß der ankommenden Übertragungsleitung (8) dienende Zweig des Pumpkopplers (2) aus einer Faser besteht, die einen inneren Mantelbereich hat, dessen Brechungsindex dem des äußeren Mantelbereiches der Faser angepaßt ist, und die im übrigen die gleichen optischen Eigenschaften aufweist wie der Lichtwellenleiter der Übertragungsleitung (8).

2. Faseroptischer Verstärker nach Anspruch 1, dadurch gekennzeichnet, daß die Ausbreitungskonstanten in beiden Fasern im Bereich der Koppelzone gleich groß sind.

3. Faseroptischer Verstärker nach Anspruch 1, dadurch gekennzeichnet, daß die Spleißstelle (10) zwischen dem dotierten Faserstück (7) und dem Lichtwellenleiter der abgehenden Übertragungsleitung (9) getapert ist.

4. Verfahren zur Herstellung eines faseroptischen Verstärkers nach Anspruch 1, dadurch gekennzeichnet, daß eine der beiden zu verschmelzenden Fasern vor dem Verschmelzen und Ausziehen zum Pumpkoppler (2) getapert wird.

5. Verfahren zur Herstellung eines faseroptischen Verstärkers nach Anspruch 1, dadurch gekennzeichnet, daß bei einer der beiden zu verschmelzenden Fasern vor dem Verschmelzen und Ausziehen zum Pumpkoppler (2) der Fasermantel durch Abätzen teilweise oder ganz entfernt wird.

## Claims

1. Fiber-optic amplifier, consisting of a pump coupler with several ports (3-6) of the type of optical fusion couplers, a pump source (1) connected with a first port (3) of the pump coupler (2), and a doped length of fiber (7), connected with another port (5) of the pump coupler (2), whose free end and another port (4) of the pump coupler (2) serve for connection with transmission lines consisting of standardized optical waveguides (8, 9), in which the arm of the pump coupler (2) intended for coupling to the pump source (1) and also connected with the doped length of fiber (7) consists of a fiber adapted to the mode field diameter of the doped length of fiber (7) and in which the arm of the pump coupler (2) serving for connection of the incoming transmission line (8) consists of a fiber that has an inner cladding region, whose refractive index is adapted to that of the outer cladding region of the fiber and that otherwise shows the same optical properties as the optical waveguide of the transmission line (8).

2. Fiber-optic amplifier according to claim 1, characterized by the fact that the propagation constants in both fibers have identical values within the region of the coupling zone.

3. Fiber-optic amplifier according to claim 1, characterized by the fact that the splice (10) between the doped length of fiber (7) and the optical waveguide of the outgoing transmission line (9) is tapered.

4. Process for the production of a fiber-optic amplifier according to claim 1, characterized by the fact that one of the two fibers to be fused is tapered before fusion and drawing to the pump coupler (2).

5. Process for the production of a fiber-optic amplifier according to claim 1, characterized by the fact that, in one of the two fibers to be fused, the fiber cladding is partially or completely removed by etching before fusion and drawing to the pump coupler (2).

## Revendications

1. Amplificateur optique à fibre, constitué d'un coupleur de lumière de pompage, présentant plusieurs raccords (3-6), du type coupleur optique réalisé par fusion, d'une source (1) de lumière de pompage reliée à un premier raccord (3) du coupleur (2) de lumière de pompage et d'un élément de fibre (7), dopé, qui est relié à un autre raccord (5) du coupleur (2) de lumière de pompage et dont l'extrémité libre, ainsi qu'un autre raccord (4) du coupleur (2) de lumière de pompage, servent à la liaison avec des lignes de transmission optique (8, 9) constituées de guides standardisés d'ondes lumineuses, amplificateur dans lequel l'embranchement, prévu pour le couplage avec la source (1) de lumière de pompage et reliée d'autre part avec l'élément de fibre dopé (7), du coupleur (2) de lumière de pompage est constitué d'une fibre accordée au diamètre de définition des modes de l'élément de fibre dopé (7), et dans lequel l'embranchement, servant au raccordement de la ligne de transmission (8) qui arrive, du coupleur (2) de lumière de pompage est constitué d'une fibre qui présente une zone intérieure de l'enveloppe dont l'indice de réfraction est accordé à celui de la zone extérieure de l'enveloppe, et qui, par ailleurs, présente les mêmes caractéristiques optiques que le guide d'ondes lumineuses de la ligne de transmission (8).

2. Amplificateur optique à fibre selon la revendication 1, caractérisé par le fait que les constantes de propagation dans les deux fibres ont la même valeur au voisinage de la zone de couplage.

3. Amplificateur optique à fibre selon la revendication 1, caractérisé par le fait que l'emplacement de raccordement (10) entre l'élément de fibre dopé (7) et le guide d'ondes lumineuses de la ligne de transmission (9) qui part est aminci en cône.

4. Procédé de fabrication d'un amplificateur optique à fibre selon la revendication 1, caractérisé par le fait qu'avant sa fusion et son étirage pour donner le coupleur (2) de lumière de pompage, on amincit en cône l'une des deux fibres à faire fondre.

5. Procédé de fabrication d'un amplificateur optique à fibre selon la revendication 1, caractérisé par le fait qu'avant sa fusion et son étirage pour donner le coupleur (2) de lumière de pompage, on enlève, partiellement ou totalement, sur l'une des deux fibres à faire fondre, l'enveloppe de la fibre par attaque chimique.
